# EUROPEAN PATENT APPLICATION

(11) **EP 4 656 476 A1**
(43) Date of publication of application: **03.12.2025**
(21) Application number: 23918051.6
(22) Date of filing: 27.01.2023
(51) Int. Cl.: B60W 30/06

(54) **PARKING ASSISTANCE METHOD AND PARKING ASSISTANCE DEVICE**

(71) Applicant: Nissan Motor Co., Ltd., Kanagawa 221-0023 (JP)
(72) Inventor: SUZUKI Yasuhiro, Atsugi-shi, Kanagawa 243-0123 (JP); MUSHA Yusuke, Atsugi-shi, Kanagawa 243-0123 (JP)
(74) Representative: Grünecker Patent- und Rechtsanwälte PartG mbB
(86) International application number: PCT/JP2023/002662
(87) International publication number: WO 2024/157459

(57) **Abstract**

A parking assistance method for assisting parking of an own vehicle (1) at a target parking position (31) includes: at a time of registering the target parking position (31) in a storage device (19b), automatically selecting, as a parking type of parking the own vehicle (1) at the target parking position (31), one parking type from a plurality of parking types including at least right-angle parking and parallel parking; determining a parking type of parking the own vehicle (1) at the target parking position (31) in accordance with an input operation from a user with respect to the selected parking type; and registering the target parking position (31) and the determined parking type in the storage device (19b).

## Description

### Technical Field

The present invention relates to a parking assistance method and a parking assistance device.

### Background Art

In PTL 1 described below, displaying, when recognizing a parking area where a vehicle can be parked in either parking type of right-angle parking or parallel parking, a screen in which a user can select the right-angle parking or the parallel parking on a touch panel is described.

### Citation List

### Patent Literature

PTL 1: JP 2021-062715 A

### Summary of Invention

### Technical Problem

In parking assistance that assists parking of an own vehicle at a pre-registered target parking position, automatically registering a parking type of parking the own vehicle at the target parking position enables convenience for a user to be improved. However, in some cases, it becomes difficult to appropriately determine a parking type, depending on a parking mode.

An object of the present invention is to, in parking assistance in parking of an own vehicle at a pre-registered target parking position, when a parking type of parking the own vehicle at the target parking position is registered, improve convenience for a user and at the same time cope with various parking modes.

### Solution to Problem

According to one aspect of the present invention, a parking assistance method for assisting parking of an own vehicle at a pre-registered target parking position is provided. The parking assistance method includes: at a time of registering the target parking position in a storage device, automatically selecting, as a parking type of parking the own vehicle at the target parking position, one parking type from a plurality of parking types including at least right-angle parking and parallel parking; determining a parking type of parking the own vehicle at the target parking position in accordance with an input operation from a user with respect to the selected parking type; and registering the target parking position and the determined parking type in the storage device.

### Advantageous Effects of Invention

According to the present invention, it is possible to, in parking assistance in parking of an own vehicle at a pre-registered target parking position, when a parking type of parking the own vehicle at the target parking position is registered, improve convenience for a user and at the same time cope with various parking modes.

### Brief Description of Drawings

FIG. 1 is a schematic configuration diagram of a parking assistance device of embodiments;
FIGS. 2A to 2C are schematic diagrams of parking types;
FIG. 3 is a schematic diagram of an example of a registration guidance screen;
FIG. 4 is a schematic diagram of an example of a registration acceptance screen;
FIG. 5 is a schematic diagram of an example of a first advanced setting screen;
FIG. 6 is a flowchart of a parking assistance method of a first embodiment;
FIGS. 7A and 7B are schematic diagrams descriptive of an example of a detection method of a target parking position using learned target objects;
FIG. 8 is a block diagram of an example of a functional configuration of a controller in FIG. 1;
FIGS. 9A and 9B are schematic diagrams of an example of a determination method of parking types;
FIG. 10 is a schematic diagram of an example of a parking assistance setting screen;
FIG. 11 is a schematic diagram of an example of a parking position selection screen;
FIG. 12 is a schematic diagram of an example of a second advanced setting screen;
FIG. 13 is a schematic diagram of an example of a first parking assistance screen;
FIG. 14 is a schematic diagram of an example of a second parking assistance screen;
FIG. 15 is a flowchart of an example of registration processing of the target parking position; and
FIG. 16 is a flowchart of an example of processing at the time of parking assistance.

### Description of Embodiments

### (First Embodiment)

### (Configuration)

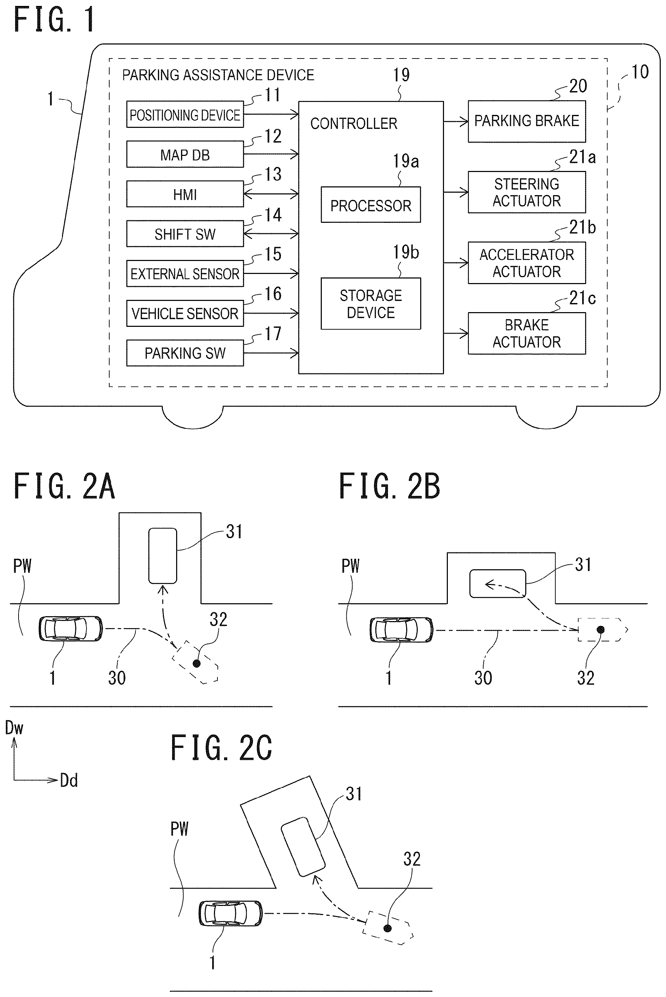

FIG. 1 is a diagram illustrative of a schematic configuration example of a parking assistance device of embodiments. An own vehicle 1 includes a parking assistance device 10 configured to assist parking of the own vehicle 1 at a target parking position. The parking assistance device 10 assists the own vehicle 1 in traveling along a target parking route from a current position of the own vehicle 1 to the target parking position. For example, the driving assistance device 10 may perform autonomous driving to control the own vehicle 1 to travel to the target parking position along the target parking route of the own vehicle 1. The autonomous driving to control the own vehicle 1 to travel to the target parking position along the target parking route means control to automatically perform all or a portion of travel along the target parking route of the own vehicle 1 by controlling all or some of a steering angle, driving force, and braking force of the own vehicle 1. Alternatively, the parking assistance device 10 may assist a user on board the own vehicle 1 (for example, a passenger such as a driver) in parking the own vehicle 1 by displaying the target parking route and the current position of the own vehicle 1 on a display device that the user can visually recognize.

A positioning device 11 measures the current position of the own vehicle 1. The positioning device 11 includes, for example, a global navigation satellite system (GNSS) receiver. In a map database (map DB) 12, map data are stored. The map data stored in the map database 12 may be, for example, map data for navigation or high-definition map data that is suitable as a map for autonomous driving.

Human-machine interfaces (HMIs) 13 are interface devices that transfer information between the parking assistance device 10 and the user. For example, the HMIs 13 may include a display device that the user can visually recognize. In the following description, the display device in the HMIs 13 is simply referred to as "display device". The HMIs 13 may include an interface (such as a touch panel, a button, a switch, a lever, a dial, and a keyboard) accepting an operation input from the user.

A shift switch (shift SW) 14 is a switch for the driver or the parking assistance device 10 to switch a shift position of the own vehicle 1.

External sensors 15 detect an object existing in a predetermined distance range from the own vehicle 1. The external sensors 15 detect a surrounding environment of the own vehicle 1, such as a relative position between an object existing in surroundings of the own vehicle 1 and the own vehicle 1, distance between the own vehicle 1 and the object, and a direction in which the object exists. The external sensors 15 may include, for example, a camera to capture an image depicting the surrounding environment of the own vehicle 1. The external sensors 15 may include a ranging device, such as a laser range finder, a radar, a LiDAR, and a sonar. Vehicle sensors 16 detect various information (vehicle information) about the own vehicle 1. For example, the vehicle sensors 16 may include a vehicle speed sensor, a triaxial acceleration sensor, and a sensor to detect a steering angle of a steering wheel or a steered angle of steered wheels. A parking switch (parking SW) 17 is a switch to start parking assistance control performed by the parking assistance device 10.

A controller 19 is an electronic control unit that performs parking assistance control of the own vehicle 1. The controller 19 includes a processor 19a and a peripheral component, such as a storage device 19b. The processor 19a may be, for example, a CPU or an MPU. The storage device 19b may include a semiconductor storage device, a magnetic storage device, an optical storage device, or the like. Functions of the controller 19, which will be described below, are achieved by, for example, the processor 19a executing computer programs stored in the storage device 19b. A parking brake 20 generates friction braking force on wheels of the own vehicle 1 in accordance with operation by the user or a control signal from the controller 19. A steering actuator 21a controls a steering mechanism of the own vehicle 1 in accordance with a control signal from the controller 19. An accelerator actuator 21b controls accelerator opening of a drive device, which is an engine or a drive motor, in accordance with a control signal from the controller 19. A brake actuator 21c causes a braking device to operate in accordance with a control signal from the controller 19.

Next, the parking assistance control performed by the controller 19 will be described. FIGS. 2A and 2B are now referred to. The user registers a target parking position 31 in the storage device 19b in advance before using the parking assistance control. At the time of registering the target parking position 31, the user parks the own vehicle 1 at the target parking position 31 by manual driving. FIGS. 2A and 2B are schematic diagrams illustrative of a situation in which at the time of registering the target parking position 31, the user parks the own vehicle 1 at the target parking position 31. FIG. 2A illustrates a case of right-angle parking, and FIG. 2B illustrates a case of parallel parking. A reference sign 30 denotes a travel trajectory when the own vehicle 1 is parked by manual driving. A reference sign 32 denotes a maneuvering position that is a position at which the own vehicle 1 is maneuvered back and forth on the travel trajectory 30. Note that "maneuvering back and forth" refers to operation of changing the shift position of the own vehicle 1 from a forward travel position to a reverse travel position in reverse parking. A reference sign PW denotes a pathway where the own vehicle 1 to be parked at the target parking position 31 can travel, and the target parking position 31 is provided in such a manner as to face the pathway PW. In the following description, a width direction and a travel direction of the pathway PW are sometimes referred to as "pathway width direction Dw" and "depth direction Dd", respectively. In addition, the right-angle parking and the parallel parking mean to park a vehicle at a right angle and in parallel with respect to the travel direction (that is, the depth direction Dd) of the pathway PW, which the target parking position 31 faces, respectively. In addition, the right-angle parking may include garage parking in which a vehicle is parked at a right angle with respect to the travel direction of the pathway.

When the target parking position 31 is to be registered in the storage device 19b, the user performs an operation to instruct registration of the target parking position 31 (hereinafter, sometimes referred to as "registration operation"). For example, the registration operation may be to manipulate (press) a parking switch 17 when the shift position is in a parking range. The controller 19 may automatically start the registration processing of the target parking position 31 when the shift position changes to the parking range. The parking assistance device 10 may be able to be set to an automatic registration start mode in which the controller 19 automatically starts the registration processing of the target parking position 31 when the shift position changes to the parking range or a manual registration start mode in which the controller 19 starts the registration processing of the target parking position 31 when the parking switch 17 is operated while the shift position is in the parking range, by switching therebetween.

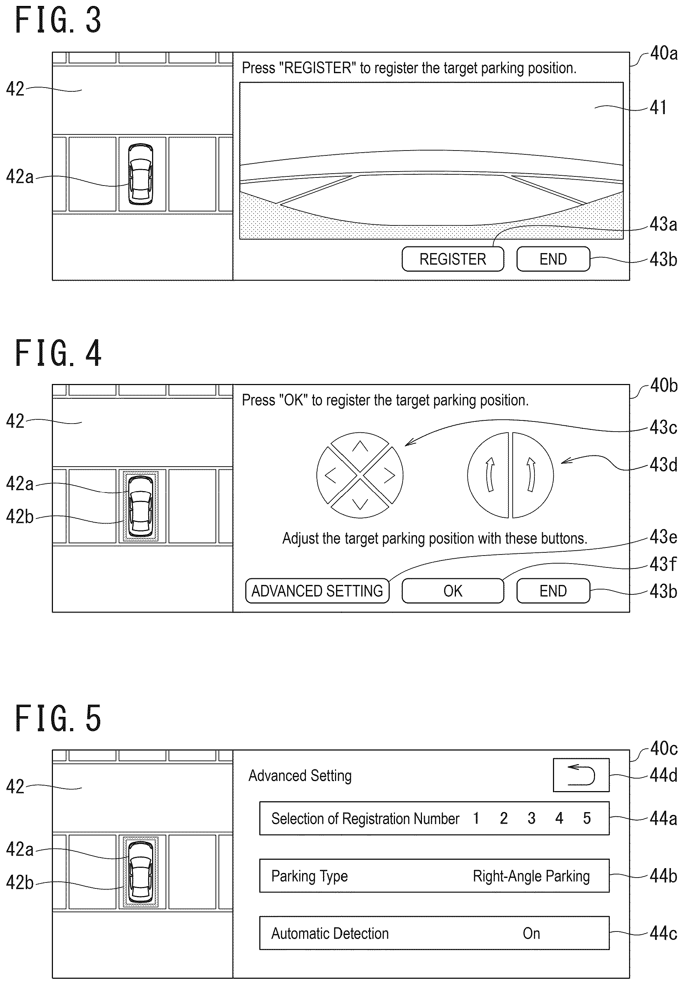

When staring the registration processing, the controller 19 detects the target parking position 31. For example, the controller 19 may detect the target parking position 31, based on a measurement result of the current position of the own vehicle 1 measured by the positioning device 11. The controller 19 displays a registration guidance screen that guides the user to register the target parking position 31, on the display device. FIG. 3 is a schematic diagram of an example of the registration guidance screen. For example, a registration guidance screen 40a includes a captured image 41 generated by capturing the surroundings of the own vehicle 1 and an overhead view image 42 generated by converting captured images of the surroundings of the own vehicle 1. On the overhead view image 42, an own vehicle icon 42a representing the current position of the own vehicle 1 is superimposed.

The registration guidance screen 40a includes a registration button 43a and an end button 43b as components of a graphical user interface (GUI) to accept an operation from the user. A touch panel is installed on the display device, and when the user operates a component of the GUI, the controller 19 accepts the operation by the user via the touch panel. When the end button 43b is operated, the controller 19 suspends the registration processing of the target parking position 31. When the registration button 43a is operated, the controller 19 automatically selects, as a parking type of parking the own vehicle 1 at the target parking position 31, one parking type from a plurality of parking types including at least the right-angle parking and the parallel parking and displays a registration acceptance screen that accepts the registration operation of the target parking position 31 on the display device.

FIG. 4 is a schematic diagram of an example of the registration acceptance screen. For example, a registration acceptance screen 40b includes an overhead view image 42. On the overhead view image 42, a guide slot line 42b indicating the target parking position 31 is superimposed. In addition, the registration acceptance screen 40b includes, as components of the GUI, an end button 43b, parking position adjustment buttons 43c and parking direction adjustment buttons 43d to finely adjust a position and a direction of the target parking position 31, an advanced setting button 43e, and a determination button 43f. When the advanced setting button 43e is operated, the controller 19 displays a first advanced setting screen that accepts an operation from the user to set details of the target parking position 31, on the display device.

FIG. 5 is a schematic diagram of an example of the first advanced setting screen. A first advanced setting screen 40c includes an overhead view image 42. In addition, the first advanced setting screen 40c includes, as components of the GUI, a registration number selection operation area 44a, a parking type selection operation area 44b, an automatic detection mode setting operation area 44c, and a back button 44d. The registration number selection operation area 44a is an area for selecting in which of a plurality of storage areas 1 to 5 the target parking position 31 is to be stored. The parking type selection operation area 44b is an area for accepting operation by the user to select a parking type of parking the own vehicle 1 at the target parking position 31. When the controller 19 displays the first advanced setting screen 40c for the first time after having automatically selected a parking type, the parking type that the controller 19 automatically selected is presented in the parking type selection operation area 44b. In the example in FIG. 5, "right-angle parking" is presented as the parking type that the controller 19 automatically selected.

For example, the controller 19 may accept selection operation of a parking type performed by the user by switching the parking type presented in the parking type selection operation area 44b among a plurality of parking types every time the parking type selection operation area 44b is pressed. Through this operation, the controller 19 accepts an operation input from the user to change the parking type that the controller 19 automatically selected and presented. The controller 19 may display a menu for selecting a parking type and accept a selection operation of a parking type.

The automatic detection mode setting operation area 44c is an area for selecting whether or not to automatically start the parking assistance control to assist parking at the target parking position 31 when the own vehicle 1 approaches the target parking position 31. When the back button 44d is operated, a display on an HMI 13 returns to the registration acceptance screen 40b in FIG. 4. When the determination button 43f is operated, the controller 19 registers the target parking position 31 and a parking type that is currently selected in the storage device 19b. In addition, when in a case where the display on the HMI 13 is the registration acceptance screen 40b in FIG. 4, the registration acceptance screen 40b has not been operated for a certain period of time, the controller 19 may register the target parking position 31 and the parking type that is currently selected in the storage device 19b.

Note that when the first advanced setting screen 40c has not been operated for a certain period of time after the user operated the parking type selection operation area 44b to change the parking type, the first advanced setting screen 40c may automatically return to the registration acceptance screen 40b without incorporating the change operation performed by the user. When the determination button 43f is operated in this case, the parking type that the controller 19 automatically selected is registered. Instead of this configuration, the first advanced setting screen 40c may return to the registration acceptance screen 40b with the change operation incorporated. In this case, the parking type that the user selected is registered.

In addition, when a state in which the first advanced setting screen 40c has not been operated without the user changing the parking type has continued for a certain period of time after the first advanced setting screen 40c was displayed for the first time after the controller 19 automatically selected a parking type, the first advanced setting screen 40c may return to the registration acceptance screen 40b while the parking type that the controller 19 automatically selected is selected. When the determination button 43f is operated in this case, the parking type that the controller 19 automatically selected is registered.

### (Operation)

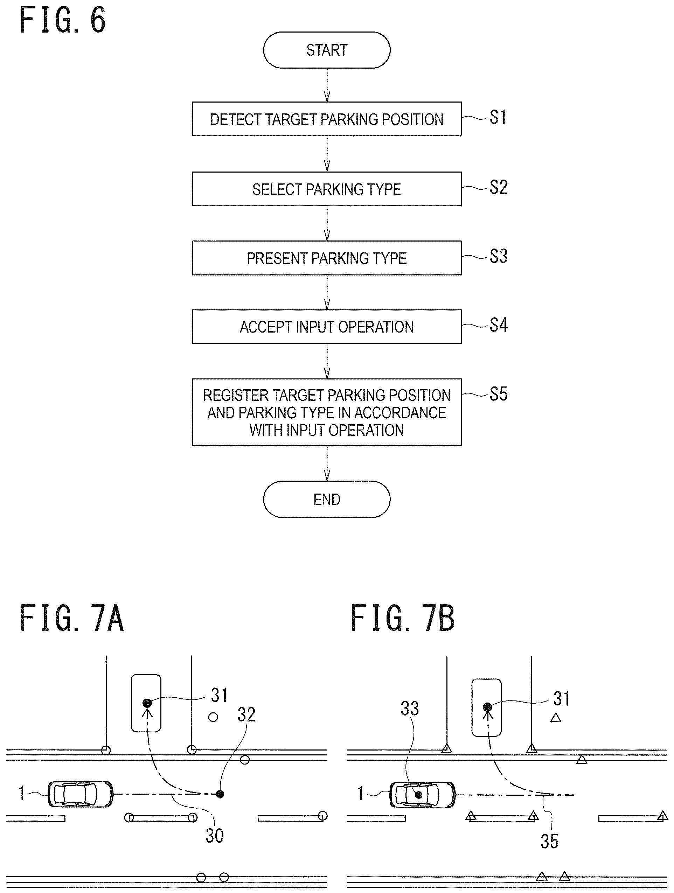

FIG. 6 is a flowchart of a parking assistance method of a first embodiment. In step S1, the controller 19 detects a target parking position 31. In step S2, the controller 19 selects one of a plurality of parking types. In step S3, the controller 19 presents the selected parking type to the user. In step S4, the controller 19 accepts an input operation from the user with respect to the presented parking type. In step S5, the controller 19 registers the target parking position 31 and the parking type selected in accordance with the input operation.

### (Second Embodiment)

A controller 19 of a second embodiment registers, at the time of registering a target parking position 31 in a storage device 19b, a target object existing in surroundings of the target parking position 31 as "learned target object". When assisting parking of an own vehicle 1, the controller 19 detects a relative position of the target parking position 31 with respect to the own vehicle 1 by matching a target object detected in the surroundings of the own vehicle 1 with a learned target object. Hereinafter, a target object detected in the surroundings of the own vehicle 1 and matched with a learned target object at the time of parking assistance is sometimes referred to as "surrounding target object". FIGS. 7A and 7B are schematic diagrams descriptive of an example of a detection method of the target parking position 31 using a learned target object. At the time of registering the target parking position 31, the controller 19 extracts a target object existing in the surroundings of the target parking position 31 and registers (stores) the extracted target object in the storage device 19b as a learned target object in advance. For example, as illustrated in FIG. 7A, a user causes the own vehicle 1 to travel along a parking route 30 by manual driving and parks the own vehicle 1 at the target parking position 31, and on this occasion, the controller 19 detects a target object existing in the surroundings of the own vehicle 1 by external sensors 15 and stores the detected target object as a learned target object. Circular marks schematically represent learned target objects.

For example, the controller 19 may store a relative position of a learned target object with reference to the target parking position 31. The controller 19 can acquire a position of a learned target object detected when the own vehicle 1 is parked at the target parking position 31 as a relative position of the learned target object with reference to the target parking position 31. For example, the controller 19 may store coordinates of a learned target object and the target parking position 31 in a coordinate system with a fixed point as a reference point (hereinafter, referred to as "map coordinate system"). The controller 19 stores learned target object data relating to a learned target object in the storage device 19b. For example, the learned target object data may include data representing a feature amount of a learned target object (hereinafter, referred to as "feature amount data"), data representing a relative positional relationship between the target parking position 31 and the learned target object (hereinafter, referred to as "relative position data"), and position data of the target parking position 31 in the map coordinate system. The controller 19 may store, for example, a relative position of a learned target object with reference to the target parking position 31 as the relative position data. The controller 19 may store coordinates of a learned target object and the target parking position 31 in the map coordinate system.

FIG. 7B is now referred to. The controller 19 starts parking assistance control of the own vehicle 1 when a user operation instructing start of the parking assistance control of the own vehicle 1 is performed (hereinafter, sometimes referred to as "starting operation"). For example, the starting operation may be an operation of a parking switch 17. In addition, the controller 19 may automatically start the parking assistance control when the own vehicle 1 approaches the registered target parking position 31. A parking assistance device 10 may be able to be set to an automatic assistance start mode in which the controller 19 automatically start the parking assistance control when the own vehicle 1 approaches the registered target parking position 31 or a manual assistance start mode in which the controller 19 starts the parking assistance control, based on a starting operation, by switching therebetween.

When the parking assistance control is started, the controller 19 extracts a target object in the surroundings of the own vehicle 1 as a surrounding target object by the external sensors 15. Triangular marks represent surrounding target objects. The controller 19 detects the target parking position 31 existing in the surroundings of the own vehicle 1 by matching a learned target object and a surrounding target object with each other and associating the same feature points with each other. The controller 19 calculates a relative position of the own vehicle 1 with respect to the target parking position 31, based on a relative positional relationship between a surrounding target object detected when the parking assistance is performed and the own vehicle 1 and a relative positional relationship between a learned target object associated with the surrounding target object and the target parking position 31. For example, the controller 19 calculates a position of the target parking position 31 in a coordinate system with reference to the current position of the own vehicle 1 (hereinafter, referred to as "vehicle coordinate system"). The controller 19 calculates a target parking route 35 starting from a self-position 33 of the own vehicle 1 and reaching the target parking position 31. The controller 19 performs the parking assistance control of the own vehicle 1, based on the calculated target parking route 35.

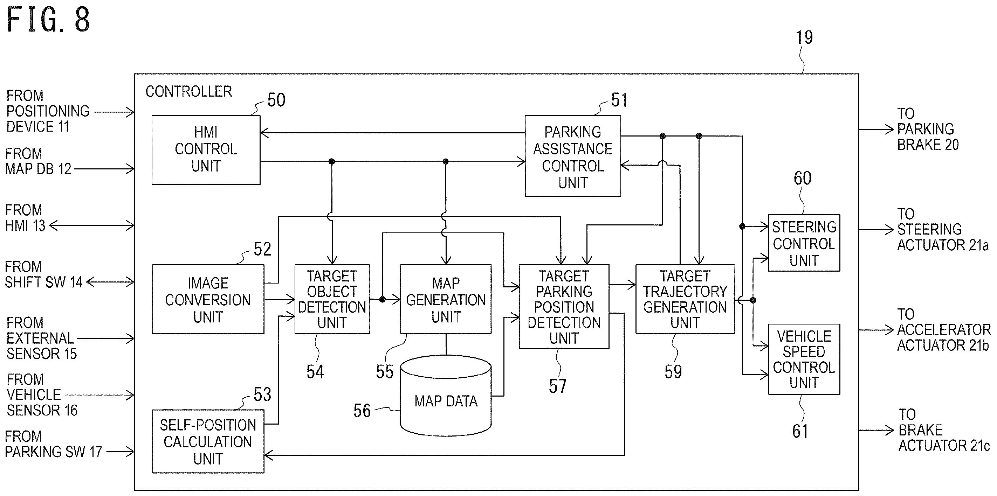

FIG. 8 is a block diagram of an example of a functional configuration of the controller 19. When an HMI control unit 50 detects a registration operation of the target parking position 31, the HMI control unit 50 outputs a map generation command to cause learned target object data to be stored in the storage device 19b, to a map generation unit 55. An image conversion unit 52 converts a captured image captured by a camera to an overhead view image that is an image viewed from a virtual viewpoint directly above the own vehicle 1. The image conversion unit 52 generates a surrounding image that is an image depicting a surrounding region of the own vehicle 1 by converting a captured image to an overhead view image at a predetermined interval and accumulating converted overhead view images along a travel route of the own vehicle 1. A self-position calculation unit 53 calculates a current position of the own vehicle 1 in a map coordinate system as a self-position by odometry (for example, dead reckoning) based on vehicle information output from vehicle sensors 16.

A target object detection unit 54 detects a target object from a surrounding image output from the image conversion unit 52. The target object detection unit 54 may detect a position of a feature point of a target object and an image feature amount of the feature point as a target object. The target object detection unit 54 outputs the detected position and image feature amount of the feature point to the map generation unit 55 and a target parking position detection unit 57 as target object data. In addition, the target object detection unit 54 outputs the self-position acquired from the self-position calculation unit 53 in synchronization with the detection of the target object to the map generation unit 55 and the target parking position detection unit 57.

The map generation unit 55 generates learned target object data and stores the generated learned target object data in the storage device 19b as map data 56 in registration processing of the target parking position 31. For example, the map generation unit 55 receives target object data and a self-position of the own vehicle 1 in the map coordinate system that is synchronous with the target object data from the target object detection unit 54. The map generation unit 55 acquires position information of the target parking position 31 in the map coordinate system. For example, the map generation unit 55 may acquire a self-position that the self-position calculation unit 53 calculates when the own vehicle 1 is positioned at the target parking position 31 as the position information of the target parking position 31. The map generation unit 55 generates relative position data, based on a position of a feature point included in the target object data, position information of the own vehicle 1 synchronous with the position of the feature point, and position information of the target parking position 31. The map generation unit 55 acquires feature amount data from the target object data output from the target object detection unit 54. The map generation unit 55 registers learned target object data including the above-described relative position data and feature amount data in the storage device 19b as the map data 56.

Next, the map generation unit 55 automatically selects a parking type of parking the own vehicle 1 at the target parking position 31 from a plurality of parking types. For example, the plurality of parking types may include angle parking as well as the above-described right-angle parking and parallel parking. FIG. 2C is a schematic diagram of the angle parking. The angle parking means to park a vehicle obliquely to a travel direction of a pathway PW. The parking type "angle parking" may be further divided into right oblique angle parking or left oblique angle parking, depending on a parking direction with respect to the travel direction of the pathway PW. For example, the angle parking in FIG. 2C is left oblique angle parking since the parking direction exists in a left oblique direction with respect to the travel direction of the pathway PW.

For example, the map generation unit 55 may select a parking type when the user parks the own vehicle 1 at the target parking position 31 by manual driving at the time of registering the target parking position 31 in advance. For example, the map generation unit 55 may determine a parking type, based on a shape of a travel trajectory 30 when the own vehicle 1 is parked at the target parking position 31 by manual driving. For example, the map generation unit 55 may calculate a travel trajectory 30 by continuously recording the self-position measured by the self-position calculation unit 53 while the own vehicle 1 is traveling to the target parking position 31.

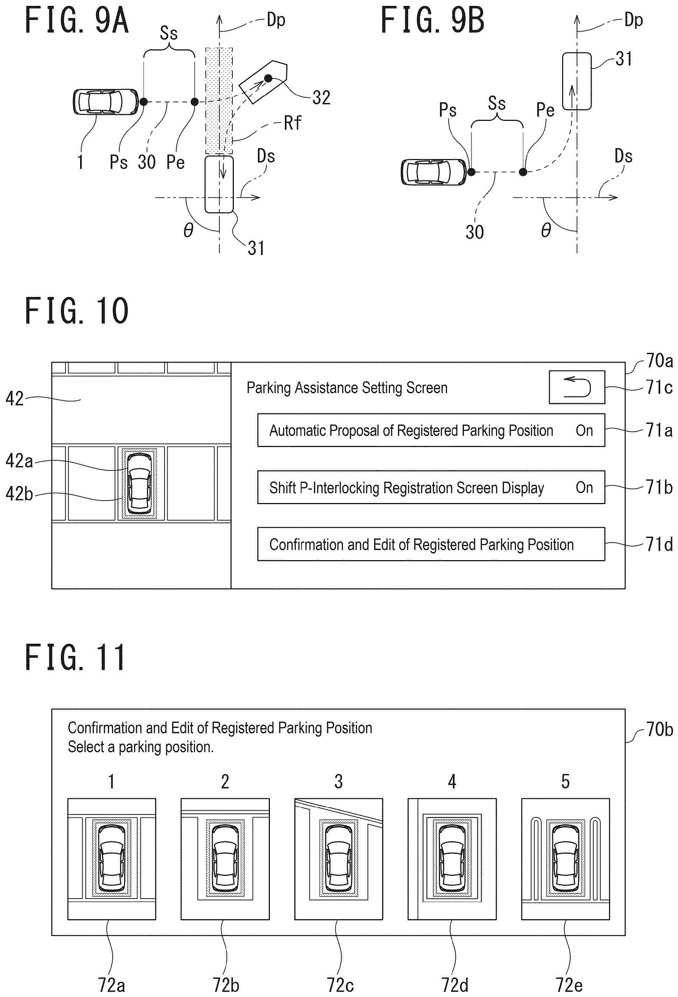

FIG. 9A is a schematic diagram of an example of a determination method of a parking type when reverse parking is performed. Note that the reverse parking means a parking type in which a vehicle enters the parking space backward, with the rear of the vehicle leading into the space.

For example, the map generation unit 55 detects a section of the travel trajectory 30 in which the own vehicle 1 travels forward and comes close to the target parking position 31 as a straight travel section Ss. Reference signs Ps and Pe denote a start point and an end point of the straight travel section Ss, respectively. The map generation unit 55 detects a direction in which the own vehicle 1 travels through the straight travel section Ss as a straight travel section direction Ds of the straight travel section Ss. In addition, the map generation unit 55 detects a parking direction Dp that is a direction in which the own vehicle 1 is parked at the target parking position 31. For example, the map generation unit 55 detects a front direction of the own vehicle 1 in a state of the own vehicle 1 being parked at the target parking position 31 as the parking direction Dp. The map generation unit 55 may determine a parking type, based on an angle θ between the straight travel section direction Ds and the parking direction Dp. For example, when the angle θ falls within a first predetermined angle θ1, the map generation unit 55 may determine that the parking type is the parallel parking. In addition, for example, when the angle θ is greater than the first predetermined angle θ1 and falls within a second predetermined angle θ2 (>the first predetermined angle θ1) and distance of the straight travel section Ss is greater than or equal to a predetermined distance D1, the map generation unit 55 may determine that the parking type is the angle parking. In addition, for example, when the angle θ is greater than the second predetermined angle θ2 or the angle θ is greater than the first predetermined angle θ1 and the distance of the straight travel section Ss is less than the predetermined distance D1, the map generation unit 55 may determine that the parking type is the right-angle parking. For example, the first predetermined angle θ1 and the second predetermined angle θ2 may be 20 degrees and 65 degrees, respectively, and the predetermined distance D1 may be 3 m. Note that a hatched region Rf in FIG. 9A represents a region obtained by extending a parking space at the target parking position 31 in the parking direction Dp. The map generation unit 55 may set the end point Pe of the straight travel section Ss on the start point Ps side of the region Rf, lest the straight travel section Ss intersect with the extension region Rf.

In addition, the map generation unit 55 may select whether the parking type of parking the own vehicle 1 at the target parking position 31 is reverse parking or head-in parking. The head-in parking is a mode in which a vehicle enters the parking space forward, with the front of the vehicle leading into the space. For example, the map generation unit 55 may determine, when under the definition that the parking direction Dp is the front direction of the target parking position 31, the travel trajectory 30 exists in front of the target parking position 31, that the parking type when the own vehicle 1 is parked at the target parking position 31 by manual driving is the reverse parking, and determine, when the travel trajectory 30 exists in the rear of the target parking position 31, that the parking type is the head-in parking. FIG. 9B is a schematic diagram of an example of the determination method of the parking type when the head-in parking is performed. Note that in the case of the head-in parking, the map generation unit 55 may determine whether the parking type is the right-angle parking or the angle parking, based on the angle θ between the straight travel section direction Ds and the parking direction Dp. For example, when the angle θ falls within the second predetermined angle θ2 and the distance of the straight travel section Ss is greater than or equal to the predetermined distance D1, the map generation unit 55 may determine that the parking type is the angle parking. In addition, for example, when the angle θ is greater than the second predetermined angle θ2 or the distance of the straight travel section Ss is less than the predetermined distance D1, the map generation unit 55 may determine that the parking type is the right-angle parking.

The HMI control unit 50 displays the parking type that the map generation unit 55 selected in the parking type selection operation area 44b in the first advanced setting screen 40c. When the user operates the parking type selection operation area 44b to change the parking type, the HMI control unit 50 accepts the selection operation of the parking type performed by the user. When the user changes the parking type, the map generation unit 55 registers a parking type after the change and learned target object data of the target parking position 31 in association with each other in the storage device 19b. When the user does not change the parking type, the map generation unit 55 registers the parking type that the map generation unit 55 selected and the learned target object data in association with each other in the storage device 19b.

When after the map generation unit 55 registered the learned target object data and the parking type in the storage device 19b, the user changes the registered parking type, the HMI control unit 50 displays a parking assistance setting screen that accepts change operation of the parking type. FIG. 10 is a schematic diagram of an example of the parking assistance setting screen. A parking assistance setting screen 70a includes an overhead view image 42. In addition, the parking assistance setting screen 70a includes, as components of the GUI, an assistance mode selection operation area 71a, a registration mode selection operation area 71b, a back button 71c, and an advanced setting screen call button 71d. The assistance mode selection operation area 71a is an area for selecting one of the automatic assistance start mode and the manual assistance start mode. The registration mode selection operation area 71b is an area for selecting one of the automatic registration start mode and the manual registration start mode. When the back button 71c is pressed, the display on an HMI 13 returns to a main menu screen (not illustrated). When the advanced setting screen call button 71d is pressed, the HMI control unit 50 displays a parking position selection screen for selecting a target parking position 31 the settings of which are to be changed from a plurality of registered target parking positions 31.

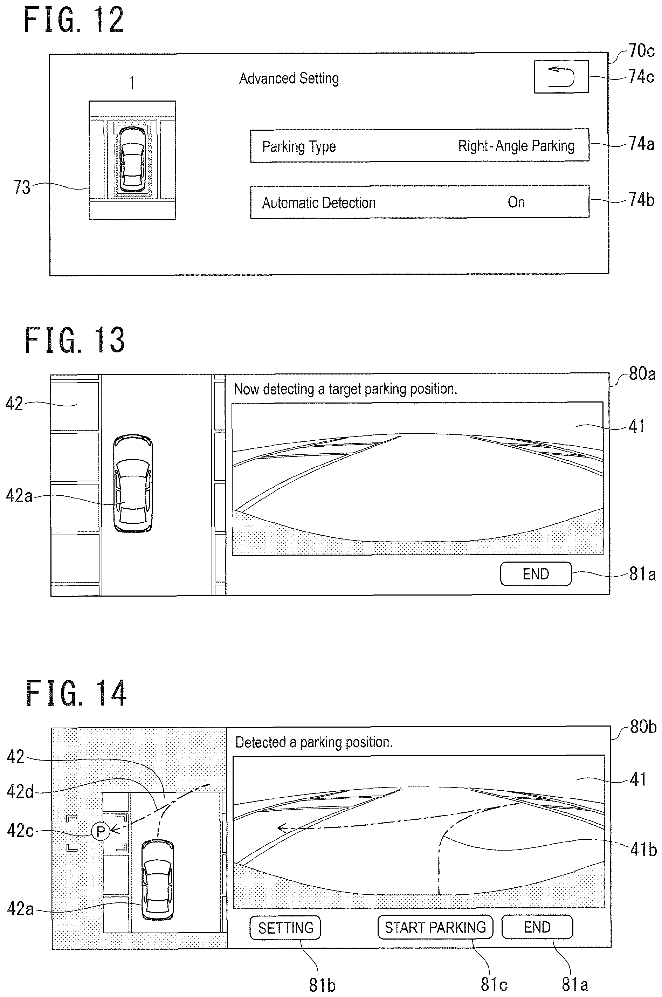

FIG. 11 is a schematic diagram of an example of the parking position selection screen. A parking position selection screen 70b includes, as components of the GUI, overhead view images 72a to 72e each of which corresponds to surroundings of one or more registered target parking positions 31. When the user touches any of the overhead view images 72a to 72e, the HMI control unit 50 displays a second advanced setting screen that accepts advanced settings of a target parking position 31 included in the touched overhead view image from the user. FIG. 12 is a schematic diagram of an example of the second advanced setting screen. A second advanced setting screen 70c includes an overhead view image 73 of the surroundings of the selected target parking position 31, a parking type selection operation area 74a, an automatic detection mode setting operation area 74b, and a back button 74c. The parking type selection operation area 74a and the automatic detection mode setting operation area 74b are the same as the parking type selection operation area 44b and the automatic detection mode setting operation area 44c in FIG. 5, respectively. When the back button 74c is pressed, the display on the HMI 13 returns to the parking assistance setting screen 70a in FIG. 10.

Note that when the second advanced setting screen 70c has not been operated for a certain period of time after the user operated the parking type selection operation area 74a to change the parking type, the second advanced setting screen 70c may automatically return to the parking assistance setting screen 70a without incorporating the change operation of the parking type performed by the user. In this case, the parking type is not changed, and the registered parking type before the operation of the parking type selection operation area 74a is performed is maintained. Instead of this configuration, the second advanced setting screen 70c may return to the parking assistance setting screen 70a with the change operation of the parking type by the user incorporated. In this case, the parking type after the change by the user is registered.

FIG. 8 is now referred to. A parking assistance control unit 51 executes parking assistance control to assist parking of the own vehicle 1 at the registered target parking position 31. In the automatic assistance start mode, the parking assistance control unit 51 automatically starts the parking assistance control when the own vehicle 1 approaches the registered target parking position 31. In the manual assistance start mode, the parking assistance control unit 51 starts the parking assistance control when the user performs a starting operation. When the parking assistance control is started, the target parking position detection unit 57 receives target object data output from the target object detection unit 54 as target object data of a surrounding target object and also receives the self-position of the own vehicle 1 in the map coordinate system in synchronization with the reception of the target object data. The target parking position detection unit 57 detects the target parking position 31 by matching a learned target object and a surrounding target object with each other and associating the same feature points with each other. That is, the target parking position detection unit 57 determines whether or not the target parking position 31 can be detected, based on whether or not matching between the learned target object and the surrounding target object succeeds. When the matching succeeds (that is, when the target parking position 31 is detected), the target parking position detection unit 57 calculates a relative position of the own vehicle 1 with respect to the target parking position 31, based on a relative positional relationship between a surrounding target object and the own vehicle 1 and a relative positional relationship between a learned target object associated with the surrounding target object and the target parking position 31.

When the target parking position detection unit 57 starts the detection of the target parking position 31 existing in the surroundings of the own vehicle 1, the HMI control unit 50 displays guidance of the parking assistance function on a display device. For example, while the parking assistance control unit 51 is searching for the target parking position 31 existing in the surroundings of the own vehicle 1, the HMI control unit 50 displays a first parking assistance screen on the display device. FIG. 13 is a schematic diagram of an example of the first parking assistance screen. A first parking assistance screen 80a includes a captured image 41, an overhead view image 42, and an end button 81a serving as a component of the GUI. When the end button 81a is operated, the controller 19 suspends the parking assistance control.

FIG. 8 is now referred to. When the target parking position detection unit 57 detects the target parking position 31 existing in the surroundings of the own vehicle 1, a target trajectory generation unit 59 generates a target parking route starting from the current position of the own vehicle 1 and reaching the target parking position 31 in the vehicle coordinate system. For example, the target trajectory generation unit 59 may include, with respect to each of a plurality of different parking types, an individually separate travel trajectory calculation algorithm. The target trajectory generation unit 59 may generate a target parking route for parking the own vehicle 1 at the target parking position 31 in a registered parking type among the plurality of different parking types, by switching the travel trajectory calculation algorithm. In addition, the target trajectory generation unit 59 calculates a target vehicle speed profile that is a target value of vehicle speed of the own vehicle 1 on the target parking route.

When the target trajectory generation unit 59 generates a target parking route, the HMI control unit 50 displays a second parking assistance screen on the display device. FIG. 14 is a schematic diagram of an example of the second parking assistance screen. A second parking assistance screen 80b includes a captured image 41 and an overhead view image 42. Target parking routes 41a and 42d calculated by the target trajectory generation unit 59 are superimposed on the captured image 41 and the overhead view image 42, respectively. The second parking assistance screen 80b includes, as components of the GUI, an end button 81a, a setting button 81b, and a parking start button 81c. When the user presses the setting button 81b, the HMI control unit 50 displays the second advanced setting screen 70c illustrated in FIG. 12 on the display device and accepts advanced settings of the target parking position 31 detected by the target parking position detection unit 57 from the user. That is, when the HMI control unit 50 executes the parking assistance control to assist parking of the own vehicle 1 at the target parking position 31, the HMI control unit 50 accepts change operation of the parking type of parking the own vehicle 1 at the target parking position 31. The change operation of the parking type can be performed at any time point after the target parking position is registered in the storage device. For example, it may be configured such that the parking type can be changed by an operation input from the user whenever the own vehicle 1 is stopping, or it may be configured to allow a change in the parking type whenever the own vehicle 1 comes close to the registered parking position.

When the HMI control unit 50 accepts a change operation of the parking type in the second advanced setting screen 70c, the target trajectory generation unit 59 regenerates a target parking route, based on the parking type after the change. The HMI control unit 50 may display the regenerated target parking route in a superimposing manner on the captured image 41 and the overhead view image 42 in FIG. 14. When the parking start button 81c is operated, the assistance in parking of the own vehicle 1 at the target parking position 31 is started. FIG. 8 is now referred to. A steering control unit 60 controls a steering actuator 21a in such a way that the own vehicle 1 travels along the target parking route. A vehicle speed control unit 61 controls an accelerator actuator 21b and a brake actuator 21c in such a way that the vehicle speed of the own vehicle 1 changes in accordance with the target vehicle speed profile. When the own vehicle 1 reaches the target parking position 31 and the parking assistance control is completed, the parking assistance control unit 51 causes a parking brake 20 to operate and switches the shift position to a parking range.

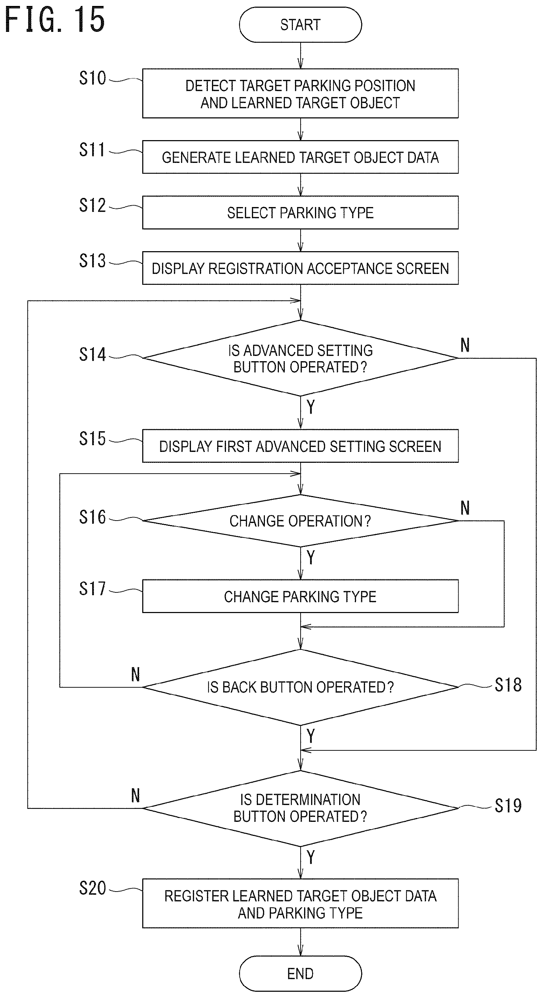

FIG. 15 is a flowchart of an example of the registration processing of the target parking position 31. In step S10, the controller 19 detects a target parking position 31 and a learned target object in the surroundings of the target parking position 31. In step S11, the controller 19 generates learned target object data. In step S12, the controller 19 selects a parking type, based on a shape of a parking route 30 in the case of manual driving. In step S13, the controller 19 displays the registration acceptance screen 40b. In step S14, the controller 19 determines whether or not the advanced setting button 43e has been operated. When the advanced setting button 43e has not been operated (step S14: N), the process proceeds to step S19. When the advanced setting button 43e is operated (step S14: Y), the process proceeds to step S15. In step S15, the controller 19 displays the first advanced setting screen 40c. In step S16, the controller 19 determines whether or not a change operation of the parking type has been performed in the first advanced setting screen 40c. When no change operation has been performed (step S16: N), the process proceeds to step S18. When a change operation is performed (step S16: Y), the process proceeds to step S17.

In step S17, the controller 19 changes the parking type that is to be registered in the storage device 19b from the parking type selected in step S12 to the parking type that the user selected in step S16. In step S18, the controller 19 determines whether or not the back button 44d has been operated. When the back button 44d has not been operated (step S18: N), the process returns to step S16. When the back button 44d is operated (step S18: Y), the process proceeds to step S19. In step S19, the controller 19 determines whether or not the determination button 43f has been operated. When the determination button 43f has not been operated (step S19: N), the process returns to step S14. When the determination button 43f is operated (step S19: Y), the process proceeds to step S20. In step S20, the controller 19 registers the learned target object data and the parking type in the storage device 19b.

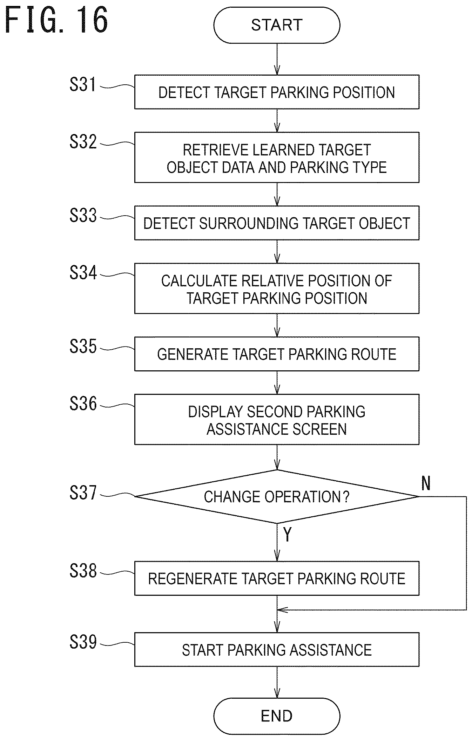

FIG. 16 is a flowchart of an example of processing at the time of the parking assistance. In step S31, the controller 19 measures a current position of the own vehicle 1 by the positioning device 11 and detects the registered target parking position 31 in a vicinity of the current position. In step S32, the controller 19 retrieves the learned target object data of the target parking position 31 and the parking type from the storage device 19b. In step S33, the controller 19 detects a surrounding target object. In step S34, the controller 19 detects a relative position of the target parking position 31 with respect to the own vehicle 1 by matching the surrounding target object and the learned target object with each other. In step S35, the controller 19 generates a target parking route. In step S36, the controller 19 displays the second parking assistance screen 80b. In step S37, the controller 19 determines whether or not a change operation of the parking type by the user has been accepted. When no change operation has been accepted (step S37: N), the process proceeds to step S39. When a change operation is accepted (step S37: Y), the process proceeds to step S38. In step S38, the controller 19 regenerates a target parking route, based on the parking type after the change. In step S39, the controller 19 assists parking of the own vehicle 1, based on the regenerated target parking route.

### (Advantageous Effects of Embodiments)

(1) A controller 19: at a time of registering the target parking position in a storage device, automatically selects, as a parking type of parking the own vehicle 1 at the target parking position, one parking type from a plurality of parking types including at least right-angle parking and parallel parking; determines a parking type of parking the own vehicle 1 at the target parking position in accordance with an input operation from a user with respect to the selected parking type; and registers the target parking position and the determined parking type in the storage device. The controller 19 may change, at an arbitrary time point after registering the target parking position, a registered parking type in accordance with an input operation from the user. The controller 19 may change, at a time of assisting parking of the own vehicle 1 at the target parking position after registering the target parking position, a registered parking type in accordance with an input operation from the user. Because of this configuration, it is possible to improve convenience for the user and also cope with various parking modes at the time of registering a parking type.
(2) The controller 19 may, at a time of assisting parking of the own vehicle 1 after registering the target parking position: calculate a relative positional relationship between the target parking position and a current position of the own vehicle 1; generate a travel trajectory starting from a current position of the own vehicle 1 and reaching the target parking position, based on the calculated relative positional relationship and a registered parking type; regenerate, when having changed a registered parking type in accordance with an input operation from the user, the travel trajectory, based on a parking type after change; and assist parking of the own vehicle 1 at the target parking position, based on the travel trajectory. Because of this configuration, it is possible to cope with various parking modes.
(3) The controller 19 may: detect a target object existing in surroundings of the target parking position in advance and register learned target object data representing a relative positional relationship between the detected target object and the target parking position; detect, at a time of causing the own vehicle 1 to move to the registered target parking position, a position of a surrounding target object, the surrounding target object being a target object existing in surroundings of the own vehicle 1; calculate a relative positional relationship between the target parking position and a current position of the own vehicle 1, based on the learned target object data and a position of the surrounding target object; generate a travel trajectory starting from a current position of the own vehicle 1 and reaching the target parking position, based on the calculated relative positional relationship; and assist parking of the own vehicle 1 at the target parking position, based on the travel trajectory. Because of this configuration, it is possible to generate a travel trajectory reaching the target parking position with high precision.
(4) The controller 19 may select a parking type, based on an angle between a direction of a straight travel section of a travel trajectory, the straight travel section being a section in which at a time of being parked at the target parking position, the own vehicle 1 travels forward and comes close to the target parking position, and a front direction of the own vehicle 1 in a state of the own vehicle 1 being parked at the target parking position. Because of this configuration, it is possible to automatically select a parking type.
(5) The plurality of parking types may include angle parking. In addition, the plurality of parking types may include reverse parking and head-in parking. Because of this configuration, it becomes possible to perform parking assistance in various parking types.
(6) Input operation from the user with respect to the parking type presented at a time of registering the target parking position may include the user not performing any operation for a certain period of time. The controller 19 may register, when no operation with respect to the presented parking type is performed for a certain period of time, the presented parking type. Because of this configuration, it is possible to omit an input operation from the user.

### Reference Signs List

- 1: Own vehicle
- 10: Parking assistance device
- 19: Controller

## Claims

1. A parking assistance method for assisting parking of an own vehicle at a pre-registered target parking position, the parking assistance method comprising:
at a time of registering the target parking position in a storage device, automatically selecting, as a parking type of parking the own vehicle at the target parking position, one parking type from a plurality of parking types including at least right-angle parking and parallel parking;
determining a parking type of parking the own vehicle at the target parking position in accordance with an input operation from a user with respect to the selected parking type; and
registering the target parking position and the determined parking type in the storage device.

2. The parking assistance method according to claim 1 comprising changing, at an arbitrary time point after registering the target parking position in the storage device, a parking type registered in the storage device in accordance with an input operation from the user.

3. The parking assistance method according to claim 1 comprising changing, at a time of assisting parking of the own vehicle at the target parking position after registering the target parking position in the storage device, a parking type registered in the storage device in accordance with an input operation from the user.

4. The parking assistance method according to claim 3 comprising
at a time of assisting parking of the own vehicle at the target parking position after registering the target parking position in the storage device:
calculating a relative positional relationship between the target parking position and a current position of the own vehicle;
generating a travel trajectory starting from a current position of the own vehicle and reaching the target parking position, based on the calculated relative positional relationship and a parking type registered in the storage device;
regenerating, when having changed a parking type registered in the storage device in accordance with an input operation from the user, the travel trajectory, based on a parking type after change; and
assisting parking of the own vehicle at the target parking position, based on the travel trajectory.

5. The parking assistance method according to claim 4 comprising:
detecting a target object existing in surroundings of the target parking position in advance and registering data representing a relative positional relationship between the detected target object and the target parking position in the storage device as learned target object data;
detecting, at a time of causing the own vehicle to move to the target parking position after registering the learned target object data in the storage device, a position of a surrounding target object, the surrounding target object being a target object existing in surroundings of the own vehicle; and
calculating the relative positional relationship, based on the learned target object data and a position of the surrounding target object.

6. The parking assistance method according to any one of claims 1 to 3 comprising:
detecting a target object existing in surroundings of the target parking position in advance and registering data representing a relative positional relationship between the detected target object and the target parking position in the storage device as learned target object data;
detecting, at a time of causing the own vehicle to move to the target parking position after registering the learned target object data in the storage device, a position of a surrounding target object, the surrounding target object being a target object existing in surroundings of the own vehicle; and
calculating a relative positional relationship between the target parking position and a current position of the own vehicle, based on the learned target object data and a position of the surrounding target object;
generating a travel trajectory starting from a current position of the own vehicle and reaching the target parking position, based on the calculated relative positional relationship; and
assisting parking of the own vehicle at the target parking position, based on the travel trajectory.

7. The parking assistance method according to any one of claims 1 to 6, wherein the parking assistance method automatically selects a parking type, based on an angle between a direction of a straight travel section of a travel trajectory, the straight travel section being a section in which at a time of being parked at the target parking position, the own vehicle travels forward and comes close to the target parking position, and a front direction of the own vehicle in a state of being parked at the target parking position.

8. The parking assistance method according to any one of claims 1 to 7, wherein the plurality of parking types include angle parking.

9. The parking assistance method according to any one of claims 1 to 8, wherein the plurality of parking types include reverse parking and head-in parking.

10. The parking assistance method according to any one of claims 1 to 9, wherein
input operation from the user with respect to the parking type presented at a time of registering the target parking position in the storage device includes the user not performing any operation for a certain period of time, and
the parking assistance method registers, when the user does not perform any operation with respect to the presented parking type for a certain period of time, the presented parking type in the storage device.

11. A parking assistance device configured to assist parking of an own vehicle at a pre-registered target parking position, the parking assistance device comprising
a controller configured to:
at a time of registering the target parking position in a storage device, automatically select, as a parking type of parking the own vehicle at the target parking position, one parking type from a plurality of parking types including at least right-angle parking and parallel parking;
determine a parking type of parking the own vehicle at the target parking position in accordance with an input operation from a user with respect to the selected parking type; and
register the target parking position and the determined parking type in the storage device.
